# EUROPÄISCHE PATENTSCHRIFT

(11) **EP 2 987 225 B1**
(45) Veröffentlichungstag und Bekanntmachung des Hinweises auf die Patenterteilung: **30.05.2018**
(21) Anmeldenummer: 14718950.0
(22) Anmeldetag: 14.04.2014
(51) Int. Cl.: H02K 7/18, H02K 11/00, H02K 7/02, H02K 1/26, H02K 1/27, H02K 11/30

(54) **KOMMUNIKATIONSEINRICHTUNG**
COMMUNICATION DEVICE
DISPOSITIF DE COMMUNICATION

(30) Priorität: 17.04.2013 DE 102013206955
(43) Veröffentlichungstag der Anmeldung: 24.02.2016
(73) Patentinhaber: Würth Elektronik eiSos GmbH & Co. KG, 74638 Waldenburg (DE)
(72) Erfinder: DINULOVIC, Dragan, 81738 München (DE); GERFER, Alexander, 51519 Odenthal (DE)
(74) Vertreter: Patentanwälte Ruff, Wilhelm, Beier, Dauster & Partner mbB
(86) Internationale Anmeldenummer: PCT/EP2014/057517
(87) Internationale Veröffentlichungsnummer: WO 2014/170265

(56) Entgegenhaltungen:
- WO-A1-2010/032234
- WO-A2-03/005534
- US-A1- 2002 042 292
- US-A1- 2002 153 419
- US-A1- 2012 206 296
- US-B1- 6 255 799

## Beschreibung

Zur drahtlosen Übertragung von Signalen sind Einrichtungen bekannt, die die zum Betrieb der Übertragung erforderliche Energie aus der Umgebung des übertragenden Geräts beziehen. Solche Einrichtungen werden auch im Sprachgebrauch als energy harvester bezeichnet.

Ein Beispiel für solche Einrichtungen ist ein Funkschalter, der durch mechanisches Drücken einer Taste ein Signal erzeugt, das drahtlos zu einem Empfänger übertragen wird, der dann ein elektrisches Gerät einschaltet oder ausschaltet.

Die energy harvester werden auch benutzt, um Sender mit Leistung zu versorgen, die drahtlos Messwerte übertragen, die mithilfe von Sensoren erfasst werden.

Es ist bereits ein zu diesem Zweck verwendbarer elektrodynamischer Energiewandler bekannt, der einen in einem Gehäuse federnd gelagerten Schwinger mit Dauermagneten enthält, der sich gegenüber einer Spule bewegt. Dieser Energiewandler bezieht seine mechanische Energie aus Schwingungen (DE 10 2009 041 023 A1).

Weiterhin ist eine Kommunikationsanordnung zur Anbringung an einem mobilen Gerät bekannt, die Messdaten mithilfe eines Senders überträgt. Die Anordnung enthält einen Energiespeicher in Form einer Batterie. Zum Aufladen der Batterie dient ein Energiewandler mit einem Windrad und einem Generator (DE 100 46 593 A1).

Die US 2002/0015349 A1 beschreibt eine Kommunikationseinrichtung, mit welcher kinetische Energie in elektrische Energie umgewandelt werden kann. Die Kommunikationseinrichtung weist ein Sendemodul zum Senden von Informationen auf und ist auf die Austauschbarkeit von Modulen anderer Charakteristik gleicher oder kompatibler Baugröße ausgelegt.

Die U S 2002/042292 A1 beschreibt eine Kommunikationseinrichtung mit einem batterielosen Generator, mittels dessen für eine Übertragungseinrichtung bereitgestellt wird, um ein kabelloses Signal zu erzeugen. Die WO 2010/032234 A1 beschreibt eine tragbare Energiequelle, die eine Leiterplatte mit einem Wandlermodul und einem Energiemanagementmodul aufweist.

Der Erfindung liegt die Aufgabe zu Grunde, eine drahtlos arbeitende Kommunikationseinrichtung zu schaffen, die sich mit geringem Aufwand an unterschiedlichste Anwendungsfälle und Umgebungen anpassen lässt.

Zur Lösung dieser Aufgabe schlägt die Erfindung eine Kommunikationseinrichtung mit den im Anspruch 1 genannten Merkmalen vor. Weiterbildungen der Erfindung sind Gegenstand von Unteransprüchen.

Erfindungsgemäß ist also eine solche Kommunikationseinrichtung aufgebaut aus mindestens drei Bestandteilen, die modulartig zusammengesetzt werden. Ein erstes Modul wandelt Bewegungsenergie in elektrische Energie um und wird als Wandlermodul bezeichnet. Ein zweites Modul ist ein Energiemanagementmodul, das die vom Wandlermodul bereitgestellte elektrische Energie beispielsweise speichert, transformiert und/oder umsetzt, um elektrische Energie gemäß vorgegebener Randbedingungen bereitstellen zu können. Ein drittes Modul ist ein Sendemodul, das die elektrische Energie zum eigenen Betrieb verwendet und ein Kommunikationssignal aussendet, beispielsweise ein Messwertsignal. Das Energiemanagementmodul weist eine Leiterplatte auf, auf der das Wandlermodul angeordnet ist und die einen Steckplatz für das Sendemodul aufweist.

Durch den modularen Aufbau aus drei Bestandteilen, die jeweils einzeln ausgetauscht werden können, ist es möglich, je nach Anwendungsfall ein speziell für diesen Anwendungsfall geeignetes Modul auszuwählen und in der Kommunikationseinrichtung zu verwenden.

In Weiterbildung der Erfindung ist als viertes Modul ein Bewegungsmodul vorgesehen, das mit den Wandlermodul verbunden ist und das mechanisch eine Bewegung erzeugt, insbesondere eine Drehbewegung.

In speziellen Anwendungsfällen, bei denen die Bewegung schon in geeigneter Form vorliegt, kann die Kommunikationseinrichtung mit dem Wandlermodul die Bewegungsenergie direkt abgreifen, so dass das Bewegungsmodul nicht erforderlich ist.

Es ist daher die Möglichkeit vorgesehen, dass die Module der Kommunikationseinrichtung einzeln gegen Module anderer Charakteristik, vorzugsweise aber gleicher Baugröße oder kompatibler Baugröße, ausgetauscht werden können.

Es kann vorgesehen sein, dass bei der von der Erfindung vorgeschlagenen Kommunikationseinrichtung mindestens ein vorzugsweise mechanisch in sich abgeschlossenes Modul aus einer Vielzahl von Modulen gleicher Funktionalität und gleicher oder kompatibler Baugröße ausgewählt ist.

Es kann vorgesehen sein, dass mindestens ein Modul als mechanisch getrenntes Bauelement verwirklicht ist, das derart ausgebildet ist, dass es mit dem zugeordneten benachbarten Modul mechanisch und funktionell gekoppelt werden kann.

Je nach den verwendeten Komponenten kann erfindungsgemäß in Weiterbildung vorgesehen sein, dass das Energiemanagementmodul oder das Sendemodul eine Leistungsanpassung aufweist. Diese Leistungsanpassung soll dazu dienen, die von dem Energiewandler gelieferte elektrische Energie an die Erfordernisse der Elektronik des Sendemoduls und gegebenenfalls auch an die Erfordernisse eines aktiven Sensors anzupassen.

Kommunikationseinrichtungen der hier betrachteten Art können als Übertrager von Messwerten eingesetzt werden. Falls der zu messende Wert nicht direkt die Rotationsbewegung erzeugt, kann daher in Weiterbildung das Sendemodul eine Anschlussmöglichkeit für einen Messwertsensor aufweisen. Sinnvollerweise ist dann die Leistungsanpassung auch für diesen Sensor zuständig, falls es sich um einen Sensor handelt, der zu seinem Betrieb auch elektrische Leistung benötigt.

In weiterer Ausgestaltung der Erfindung kann die Einrichtung zur mechanischen Erzeugung der Rotationsbewegung eine federbeaufschlagten Drucktaste aufweisen, deren Federbeaufschlagung dazu dient, die Drucktaste immer in eine Ausgangsposition zu versetzen. Mit einer solchen Drucktaste können beispielsweise Änderungen des Zustands von Einrichtungen überprüft werden, beispielsweise das Öffnen oder Schließen einer Klappe.

Zur Erzeugung der Rotationsbewegung kann in Weiterbildung die Drucktaste auf einen Kurbelantrieb einwirken.

Eine weitere Möglichkeit zur Erzeugung der Rotationsbewegung bei einer linearen Betätigung kann die Verwendung einer Zahnstange sein.

Eine nochmals weitere Möglichkeit zur Erzeugung einer Rotationsbewegung kann natürlich die Verwendung einer Turbine sein, die einer Strömung ausgesetzt ist, beispielsweise einer Luftströmung oder auch einer Wasserströmung.

In Weiterbildung kann die Einrichtung zur Erzeugung einer Rotationsbewegung auch ein Getriebe mit einer Übersetzung oder auch einer Untersetzung aufweisen.

Insbesondere bei einer Drucktaste zur Erzeugung der Rotationsbewegung kann vorgesehen sein, dass diese Einrichtung einen Freilauf mit einer Rücklaufsperre aufweist, damit durch mehrfaches Betätigen der Drucktaste eine länger dauernde Rotationsbewegung erzeugt werden kann.

In nochmaliger Weiterbildung der Erfindung kann vorgesehen sein, dass das Wandlermodul einen Rotor mit mindestens einem Permanentmagneten und einen von dem Rotor durch einen Luftspalt getrennten Stator mit mindestens einer Spule aufweist.

Durch die Zahl und Ausbildung der Permanentmagnete und die Zahl und Ausbildung der Spulen kann die elektrische Leistung in weiten Grenzen verändert werden, die von dem Wandlermodul geliefert wird.

Beispielsweise kann der Rotor abwechselnd gepolte Permanentmagnete aufweisen, und die Zahl und Größe der Spulen des Stators kann der Zahl und Größe der Permanentmagnete gleich sein.

In Weiterbildung der Erfindung kann die mindestens eine Spule auf eine Leiterplatte aufgebracht sein. Die Leiterplatte kann mit einem Steckplatz für das Energiemanagementmodul und/oder das Sendemodul versehen sein.

In weiterer Ausgestaltung der Erfindung kann vorgesehen sein, dass das Bauteil, das mechanisch in Rotationsbewegung versetzt wird, der Rotor des Wandlermoduls ist.

Erfindungsgemäß kann eine Kommunikationseinrichtung, wie sie hierin beschrieben wurde, als Signalgeber verwendet werden. Damit stellt die Betätigung beispielsweise der Drucktaste bereits das Signal dar, das drahtlos übertragen werden soll. Auch bei der Erzeugung der Drehbewegung durch eine Turbine oder ein Windrad kann die Rotation selbst das Signal sein, beispielsweise, wenn das Vorhandensein einer Strömungsbewegung abgefragt werden soll.

Erfindungsgemäß kann eine Kommunikationseinrichtung, wie sie hierin beschrieben wurde, zur Übertragung von Sensormesswerten verwendet werden. In diesem Fall dient die Rotationsbewegung, die mechanisch erzeugt wird, nur zur Leistungsversorgung des Sendemoduls und gegebenenfalls des Sensors.

Die Erfindung schlägt ebenfalls eine als Modul ausgebildete Einrichtung zur mechanischen Erzeugung einer Rotationsbewegung für eine Kommunikationseinrichtung vor.

Die Erfindung schlägt ebenfalls ein Wandlermodul für eine Kommunikationseinrichtung vor, die einen Rotor mit mindestens einem Permanentmagneten und einen von dem Rotor durch einen Luftspalt getrennten Stator mit mindestens einer Spule enthält.

Die Erfindung schlägt weiterhin ein Energieversorgungsmodul für eine Kommunikationseinrichtung vor, die eine als Bewegungsmodul ausgebildete Einrichtung zur mechanischen Erzeugung einer Rotationsbewegung und ein Wandlermodul zur Umwandlung der Rotationsenergie der Rotationsbewegung in elektrische Energie enthält.

Aufgrund des modularen Aufbaus und des von der Erfindung vorgeschlagenen Wandlermoduls, das hohe Energiedichten ermöglicht, hat die Kommunikationseinrichtung große und vielfältige Anwendungsbereiche.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung bevorzugter Ausführungsformen der Erfindung sowie anhand der Zeichnung. Einzelmerkmale der unterschiedlichen dargestellten Ausführungsformen lassen sich dabei in beliebiger Weise kombinieren, ohne den Rahmen der Erfindung zu überschreiten. Hierbei zeigen:
- Figur 1: schematisch eine Einrichtung zur Erzeugung einer Rotationsbewegung mithilfe einer Drucktaste;
- Figur 2: eine der Figur 1 entsprechende Darstellung mit einem Übersetzungsgetriebe;
- Figur 3: ebenfalls schematisch eine Einrichtung zur Erzeugung einer Rotationsbewegung mithilfe eines Kurbelantriebs,
- Figur 4: die geometrische Form einer Kommunikationseinrichtung;
- Figur 5: schematisch den Aufbau einer Kommunikationseinrichtung aus den drei Modulen;
- Figur 6: die Stirnansicht des Rotors eines Wandlermoduls der Kommunikationseinrichtung nach der Erfindung;
- Figur 7: die Stirnansicht des Stators des Wandlermoduls;
- Figur 8: eine vereinfachte Seitenansicht des Wandlermoduls der Kommunikationseinrichtung der Erfindung;
- Figur 9: eine den Figuren 1 - 3 entsprechende Darstellung eines Moduls zur Erzeugung einer Rotationsbewegung;
- Figur 10: eine schematische, auseinandergezogene Darstellung einer erfindungsgemäßen Kommunikationseinrichtung gemäß einer weiteren Ausführungsform,
- Figur 11: eine Ansicht der Kommunikationseinrichtung der Figur 10 von schräg oben,
- Figur 12: eine schematische Seitenansicht einer erfindungsgemäßen Kommunikationseinrichtung gemäß einer weiteren Ausführungsform und
- Figur 13: die Kommunikationseinrichtung der Figur 12 von schräg oben.

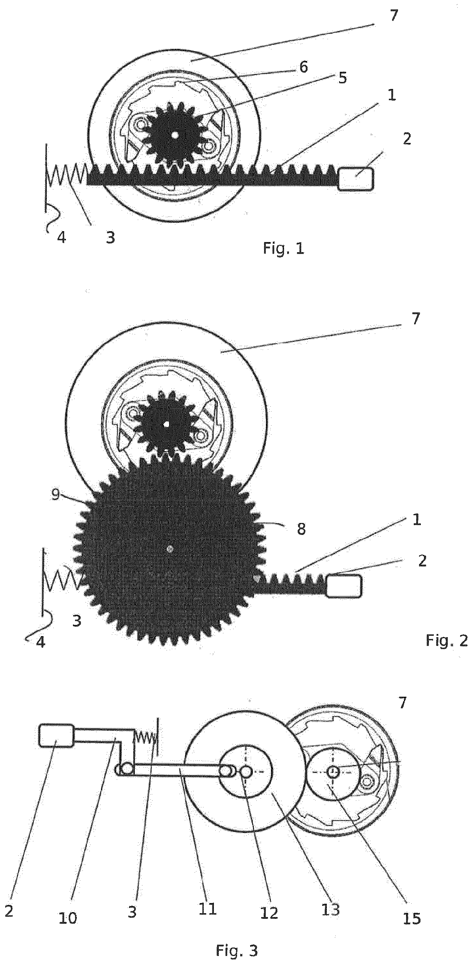

Die Figur 1 beschreibt schematisch die Einrichtung zur Erzeugung einer Rotationsbewegung. Die Einrichtung enthält eine Zahnstange 1, die in dem Modul verschiebbar gelagert ist. Die Zahnstange 1 enthält an ihrem freien Ende eine Drucktaste 2. Sie wird in die dargestellte Position durch eine Druckfeder 3 bewegt, die sich an einer Gehäusewand 4 abstützt. Die Zahnstange 1 steht mit ihrer Zahnreihe mit einem Zahnrad 5 in Eingriff. Das Zahnrad 5 ist über einen angedeuteten Freilauf 6 mit einer Scheibe 7 verbunden. Beim Verschieben der Zahnstange 1 mithilfe der Drucktaste 2, in Figur 1 nach links, wird über das Zahnrad 5 die Scheibe 7 in Rotation versetzt. Lässt man die Drucktaste 2 los, kehrt die Zahnstange 1 in die dargestellte Position zurück. Dabei wird mithilfe des Freilaufs die Scheibe 7 von der Zahnstange 1 entkoppelt. Man kann auf diese Weise durch mehrfaches Drücken eine länger dauernde Rotationsbewegung der Scheibe 7 erzeugen.

Bei der in Figur 2 dargestellten Ausführungsform steht die Zahnstange 1 mit einem Zahnrad 8 in Eingriff, das drehfest mit einem größeren Zahnrad 9 verbunden ist. Dieses größere Zahnrad 9 steht dann in Eingriff mit dem Zahnrad 5 der vorhergehenden Ausführungsform. Durch die Zwischenschaltung der beiden Zahnräder 8, 9 wird ein Übersetzungsgetriebe gebildet, so dass die Scheibe 7 bei gleichem Hub der Zahnstange 1 in schnellere Drehung versetzt wird.

Bei der in Figur 3 dargestellten Ausführungsform ist wieder eine Drucktaste 2 vorgesehen, die in dem Modul verschiebbar geführt ist und die mithilfe einer Druckfeder 3 in eine Ausgangsposition versetzt wird. Das abgewinkelte Ende der Stange 10, die die Drucktaste 2 aufweist, steht über eine Pleuelstange 11 mit einem Rad 12 in Verbindung, wobei die Pleuelstange 11 exzentrisch an dem Rad 12 angelenkt ist. Das Rad 12 ist drehfest mit einem größeren Rad 13 verbunden, dessen Umfang mit einem dem Zahnrad 5 entsprechenden Rad 15 in Eingriff steht. Im dargestellten Beispiel handelt es sich um einen Reibeingriff zwischen den Rädern 13 und 15. Im übrigen führt die Rotation des Rads 15 über einen Freilauf wieder zu einer Rotation der Scheibe 7. Die in Figur 3 dargestellte Ausführungsform stellt also einen Kurbelantrieb für die Scheibe 7 dar.

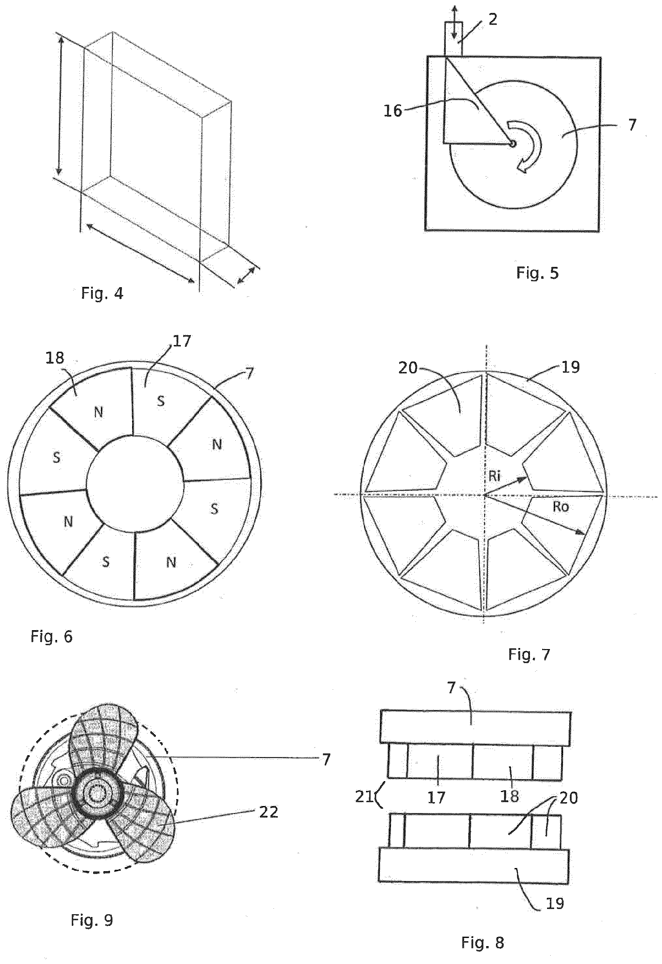

Die Figur 4 zeigt schematisch die Größe und die geometrische Form der Kommunikationseinrichtung nach einem Ausführungsbeispiel der Erfindung an. Die aus den drei Teilen bestehende Kommunikationseinrichtung soll in einem Quader untergebracht werden, wie er in Figur 4 angedeutet ist. Die Dicke des Quaders soll im Bereich von etwa 10 - 20 mm liegen, während die Kantenlängen der beiden anderen Dimensionen etwa im Bereich von 50 mm liegen sollen.

Figur 5 zeigt nun eine Seitenansicht einer solchen Kommunikationseinrichtung. Aus einer Seite des Quaders ragt die Drucktaste 2 heraus. Der Hub der Taste beträgt etwa 2 - 10 mm. Die Taste 2 setzt über eine Mechanik 16 die Scheibe 7 in Rotation.

Die Figur 6 zeigt nun in einer Stirnansicht einen Teil des Wandlermoduls, also des Moduls, das die von dem ersten Modul erzeugte Rotationsbewegung der Scheibe 7 in elektrische Energie umwandelt. Es handelt sich bei der Figur 6 um den Rotor. Die Scheibe 7 bildet das Joch des Rotors des Wandlermoduls. Sie besteht aus weichmagnetischem Material. Auf ihr sind Permanentmagnete 17,18 befestigt, deren Pole abwechselnd unterschiedlich gerichtet sind. Im dargestellten Beispiel handelt es sich um acht Permanentmagnete. Sie haben in der Draufsicht der Figur 6 Kreissektorform.

Das Wandlermodul enthält einen mit dem Rotor der Figur 6 zusammenwirkenden Stator, der in einer Stirnansicht in Figur 7 dargestellt ist. Der Stator enthält auf einem Joch 19 aus weichmagnetischem Material acht Spulen 20, die jeweils um einen Kern aus magnetischem Material herumgewickelt sind. Die Zahl und Größe der Spulen 20 entspricht der Zahl und Größe der Permanentmagnete 17,18, die auf dem Stator 7 angebracht sind.

Die Figur 8 zeigt eine Seitenansicht der Anordnung aus dem Rotor der Figur 6 und dem Stator der Figur 7. Die in Figur 6 und Figur 7 zu sehenden Seiten liegen einander gegenüber, und zwischen beiden Teilen ist ein Luftspalt 21 gebildet.

Die von dem Wandlermodul gelieferte Spannung hängt von der Rotationsgeschwindigkeit, der Zahl der Permanentmagnete und Spulen, der Zahl der Wicklungen der Spulen, dem verwendeten Material, der Größe des Luftspalts und natürlich der Gesamtgröße der Anordnung ab.

Die Figur 9 zeigt nun ein weiteres Beispiel für die Erzeugung der Rotationsbewegung. Hier ist mit dem Rotor 7 ein Windrad 22 verbunden, im dargestellten Beispiel ein dreiflügliges Windrad. Dieses Windrad 22 dient als Beispiel für eine Turbine. Selbstverständlich sind auch andere Formen von Turbinen und Windrädern möglich. Diese Art der Erzeugung der Rotationsbewegung eignet sich beispielsweise für Umgebungen, in denen ständig Wind herrscht.

Eine Anordnung, wie sie in Figur 9 dargestellt ist, kann aber auch dazu dienen, das Vorhandensein einer Luftströmung oder einer Flüssigkeitsströmung anzuzeigen.

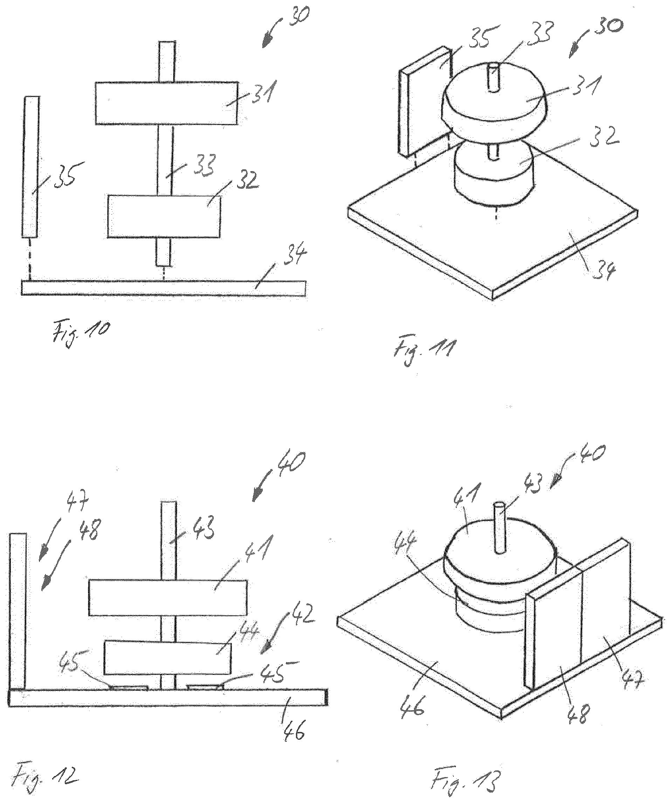

Die Darstellung der Figur 10 zeigt schematisch eine erfindungsgemäße Kommunikationseinrichtung 30, die ein Bewegungsmodul 31 und ein Wandlermodul 32 aufweist, wobei das Bewegungsmodul 31 und das Wandlermodul 32 auf einer gemeinsamen Achse 33 angeordnet sind. Mit dem Bewegungsmodul 31 wird eine Rotationsbewegung um die Achse 33 erzeugt, die dann von dem Wandlermodul 32 in elektrische Energie umgesetzt wird. Die Achse 33 ist dafür vorgesehen, auf eine Leiterplatte eines Leistungsmanagementmoduls 34 aufgesetzt zu werden. In der Darstellung der Figur 10 ist die Achse 33 von dem Leistungsmanagementmodul 34 abgehoben dargestellt und eine gestrichelte Linie soll die vorgesehene Verbindung von Achse 33 und Leistungsmanagementmodul 34 andeuten.

In dem Leistungsmanagementmodul 34 wird die von dem Wandlermodul 32 gelieferte elektrische Energie gemäß vorgegebener Randbedingungen umgesetzt. Die vom Wandlermodul 32 gelieferte elektrische Spannung wird in den Energiemanagementmodul 34 beispielsweise hochgesetzt und geregelt. Vom Wandlermodul 32 wird eine Wechselspannung geliefert, die mittels eines sich drehenden Rotors mit Permanentmagneten und gegenüber den sich drehenden Permanentmagneten stillstehenden Spulen induziert wird. Diese Wechselspannung wird in den Energiemanagementmodul 34 zuerst mittels eines Transformators auf einen Wert von einigen Volt hochgesetzt. Danach wird die Spannung gleichgerichtet und mittels eines DC-DC-Konverters auf einen gewünschten Wert geregelt. Die vom Wandlermodul 32 gelieferte Wechselspannung kann beispielsweise um einen Faktor 100 hochgesetzt werden. Als Ausgangsspannung des Energiemanagementmoduls 34 wird eine geregelte Gleichspannung mit einem Wert von beispielsweise 1,8 Volt oder 3,3 Volt geliefert, die dann einem Sendemodul 35 bereitgestellt wird.

Das Sendemodul 35 kann dann eine Information, beispielsweise ein Messwertsignal, funken. Das Signal kann dann beispielsweise an eine zentrale Station oder an eine geeignete Steuerung, beispielsweise eine Motorsteuerung, gesendet werden. Das Sendemodul 35 ist dafür vorgesehen, in einen in Figur 10 nicht dargestellten Steckplatz auf der Leiterplatte des Energiemanagementmoduls 34 eingesteckt zu werden. Dies ist mittels einer gestrichelten Linie zwischen dem Sendemodul 35 und dem Energiemanagementmodul 34 in Figur 10 angedeutet. Figur 11 zeigt eine Ansicht der Kommunikationseinrichtung 30 der Figur 10 von schräg oben. Zu erkennen ist der kompakte Aufbau der Kommunikationseinrichtung 30. Ein erheblicher Vorteil des modularen Aufbaus liegt darin, dass die einzelnen Module 31, 31, 34 und 35 nicht nur gegen Module mit anderen Eigenschaften ausgewechselt werden können, sondern dass vor allem marktübliche Module verwendet werden können. Beispielsweise kann als Energiemanagementmodul 34 ein marktfertiges System verwendet werden, beispielsweise MSP430 von Texas Instruments, LTC31xx oder LTC35XX von Linear Technology. Auch als Sendemodul können am Markt verfügbare Systeme verwendet werden, beispielsweise Semtech SX1230 oder Sendemodule ZIGBEE. Die Sendemodule können beispielsweise Signale mit einer Frequenz von 315MHz, 434MHz, 868MHz oder 915MHz senden. Die Reichweite solcher Systeme liegt typischerweise bei bis zu 100 m. Das übertragene Signal kann entweder eine Aussage über die am Bewegungsmodul 31 erzeugte Bewegungsenergie sein, beispielsweise wenn das Bewegungsmodul 31 eine Turbine aufweist und eine Aussage über eine Strömungsgeschwindigkeit gemacht werden soll. An das Sendemodul 35 oder an das Energiemanagementmodul 34 kann aber auch ein Sensor angeschlossen sein, dessen Signal dann mittels dem Sendemodul 35 übertragen wird.

Die Darstellung der Figur 12 zeigt eine weitere Kommunikationseinrichtung 40 in einer schematischen Seitenansicht. Ein Bewegungsmodul 41 und ein Wandlermodul 42 sind auf einer gemeinsamen Achse 43 angeordnet. Das Bewegungsmodul 41 erzeugt eine Rotationsenergie, die dann von dem Wandlermodul 42 in elektrische Energie umgesetzt wird. Das Wandlermodul 42 weist bei der dargestellten Ausführungsform einen Rotor 44 auf, der sich auf der Achse 43 dreht und mehrere Permanentmagnete aufweist. Durch die Drehung des Rotors 44 wird in Spulen 45 eine elektrische Spannung induziert. Die Spulen 45 sind auf einer Leiterplatte 46 vorgesehen und auf diese Leiterplatte 46 beispielsweise aufgedruckt. Die in den Spule 45 induzierte Spannung wird dann über Leiterbahnen auf der Leiterplatte 46 zu einem Leistungs- oder Energiemanagementmodul 47 übertragen. Das Energiemanagementmodul 47 stellt unter Berücksichtigung von vorgegebenen Randbedingungen dann einem Sendemodul 48 eine geeignete elektrische Energieversorgung zur Verfügung.

In der Darstellung der Figur 13 ist zu erkennen, dass das Energiemanagementmodul 47 und das Sendemodul 48 in nicht dargestellte Steckverbinder auf der Leiterplatte 46 eingesteckt sind. Dadurch kann das Energiemanagementmodul 47 einfach angesteckt werden und zusätzliche Anschlussdrähte sind nicht erforderlich, da die Übertragung der elektrischen Energie mittels Leiterbahnen auf der Leiterplatte 46 erfolgt. Das Sendemodul 48 wird in gleicher Weise angesteckt, wobei das Sendemodul 48 entweder an das Energiemanagementmodul 47 angesteckt werden kann oder ebenfalls in eine geeignet Steckverbindung auf der Leiterplatte 46, wobei über eine Steckverbindung auf der Leiterplatte 46 dann das Energiemanagementmodul 47 die für den Betrieb des Sendemoduls 48 benötigte elektrische Energie zur Verfügung stellt. Auf der Leiterplatte 46 sind, wie erwähnt wurde, nicht nur die Spulen 45 aufgedruckt sondern auch die vollständige Verschaltung dieser Spulen 45. Der Aufbau der erfindungsgemäßen Kommunikationseinrichtung 40 wird dadurch erheblich vereinfacht und, falls erforderlich, können einzelne Module in einfacher Weise gegen solche mit anderen Eigenschaften ausgetauscht werden.

## Patentansprüche

1. Kommunikationseinrichtung, (30) enthaltend
- ein Wandlermodul (32) zur Umwandlung von Bewegungsenergie, insbesondere Rotationsenergie, in elektrische Energie,
- ein mit dem Wandlermödul verbundenes Energiemanagementmodul (34) zum Bereitstellen von elektrischer Energie gemäß vorgegebenen Randbedingungen ausgehend von der vom Wandlermodul (32) bereitgestellten elektrischen Energie und
- ein Sendemodul (35) zum Senden von Informationen, bei der die Module einzeln gegen Module anderer Charakteristik, vorzugsweise aber gleicher oder kompatibler Baugröße, austauschbar sind, **dadurch gekennzeichnet, dass** das Energiemanagementmodul (34) eine Leiterplatte aufweist, auf der das Wandlermodul (32) angeordnet ist und die einen Steckplatz für das Sendemodul (35) aufweist.

2. Kommunikationseinrichtung (30) nach Anspruch 1, bei dem eine als Bewegungsmodul (31) ausgebildete Einrichtung zur mechanischen Erzeugung einer Bewegung, insbesondere einer Rotationsbewegung, vorgesehen ist, wobei das Bewegungsmodul mit dem Wandlermodul (32) verbunden ist und das Wandlermodul die in dem Bewegungsmodul erzeugte Bewegung, insbesondere Rotationsbewegung, in elektrische Energie umwandelt.

3. Kommunikationseinrichtung (30) nach einem der vorgehenden Ansprüche, bei der das Energiemanagementmodul (34) eine Leistungsanpassung aufweist.

4. Kommunikationseinrichtung (30) nach einem der vorhergehenden Ansprüche, bei der das Sendemodul (35) einen Anschluss für einen Sensor aufweist.

5. Kommunikationseinrichtung (30) nach einem der vorhergehenden Ansprüche, mit einer federbeaufschlagten Drucktaste (2) zur Erzeugung der Drehbewegung.

6. Kommunikationseinrichtung (30) nach Anspruch 5, mit einem mit der Drucktaste (2) verbundenen Kurbelantrieb.

7. Kommunikationseinrichtung (30) nach Anspruch 5, mit einer mit der Drucktaste (2) verbundenen Zahnstange (1).

8. Kommunikationseinrichtung (30) nach einem der Ansprüche 1 bis 5, mit einer einer Strömung ausgesetzten Turbine zur Erzeugung der Rotationsbewegung.

9. Kommunikationseinrichtung (30) nach einem der Ansprüche 5 bis 8, mit einer Übersetzung in dem Modul zur Erzeugung der Rotationsbewegung.

10. Kommunikationseinrichtung (30) nach einem der vorhergehenden Ansprüche, mit einer Rücklaufsperre und einem Freilauf (6).

11. Kommunikationseinrichtung (30) nach einem der vorhergehenden Ansprüche, bei der das Wandlermodul (32) einen Rotor (7) mit mindestens einem Permanentmagneten (17, 18) und einen von dem Rotor (7) durch einen Luftspalt getrennten Stator (19) mit mindestens einer Spule (20) aufweist.

12. Kommunikationseinrichtung (30) nach Anspruch 11 bei der die mindestens eine Spule auf eine Leiterplatte aufgebracht ist.

13. Kommunikationseinrichtung (30) nach Anspruch 12, bei der die Leiterplatte mit der mindestens einen Spule einen Steckplatz für das Energiemanagementmodul (34) und/oder einen Steckplatz für das Sendemodul (35) aufweist.

14. Kommunikationseinrichtung (30) nach Anspruch 11 oder 12, bei der die Rotationsbewegung die Rotationsbewegung des Rotors (7) des Wandlermoduls (32) ist.

15. Verwendung einer Kommunikationseinrichtung (30) nach einem der Ansprüche 1 bis 14 als Signalgeber.

16. Verwendung einer Kommunikationseinrichtung (30) nach einem der Ansprüche 1 bis 14 zur Übertragung von Sensormesswerten.

17. Energieversorgungsmodul für eine Kommunikationseinrichtung (30) nach einem der Ansprüche 1 bis 14, enthaltend
- eine als Bewegungsmodul (31) ausgebildete Einrichtung zur mechanischen Erzeugung einer Bewegung, insbesondere einer Rotationsbewegung und
- ein Wandlermodul (32) zur Umwandlung der Bewegungsenergie, insbesondere der Rotationsenergie, der Bewegung, insbesondere der Rotationsbewegung, in elektrische Energie.

18. Wandlermodul (32) für eine Kommunikationseinrichtung (30) nach einem der Ansprüche 1 bis 14, enthaltend einen Rotor (7) mit mindestens einem Permanentmagneten (17,18) und einen von dem Rotor (7) durch einen Luftspalt (21) getrennten Stator (19) mit mindestens einer Spule (20), vorzugsweise einer Vielzahl von Spulen (20).

## Claims

1. Communication device (30), comprising
- a converter module (32) for converting kinetic energy, in particular rotary energy, into electrical energy,
- an energy management module (34) connected to the converter module for providing electrical energy according to predefined boundary conditions proceeding from the electrical energy provided by the converter module (32), and
- a transmitter module (35) for transmitting information, wherein the modules are individually exchangeable for modules with other characteristics, but preferably with identical or compatible installation sizes,
**characterized in that**
the energy management module (34) has a printed circuit board on which the converter module (32) is arranged and which has a plug-in position for the transmitter module (35).

2. Communication device (30) according to claim 1, wherein a device designed as a motion module (31) for mechanically generating motion, in particular rotary motion, is provided, wherein the motion module is connected to the converter module (32) and the converter module converts the motion, in particular rotary motion, generated in the motion module into electrical energy.

3. Communication device (30) according to any of the preceding claims, wherein the energy management module (34) has a power matching unit.

4. Communication device (30) according to any of the preceding claims, wherein the transmitter module (35) has a connection for a sensor.

5. Communication device (30) according to any of the preceding claims, having a spring-loaded pushbutton (2) for generating the rotary motion.

6. Communication device (30) according to claim 5, having a crank drive connected to the pushbutton (2).

7. Communication device (30) according to claim 5, having a toothed rack (1) connected to the pushbutton (2).

8. Communication device (30) according to any of claims 1 to 5, having a turbine exposed to flow for generating the rotary motion.

9. Communication device (30) according to any of claims 5 to 8, having a gear transmission in the module for generating the rotary motion.

10. Communication device (30) according to any of the preceding claims, having a nonreverse ratchet and a freewheel (6).

11. Communication device (30) according to any of the preceding claims, wherein the converter module (32) has a rotor (7) with at least one permanent magnet (17, 18) and a stator (19) separated from the rotor (7) by an air gap and having at least one coil (20).

12. Communication device (30) according to claim 11, wherein the at least one coil is accommodated on a printed circuit board.

13. Communication device (30) according to claim 12, wherein the printed circuit board with the at least one coil has a plug-in position for the energy management module (34) and/or a plug-in position for the transmitter module (35).

14. Communication device (30) according to claim 11 or 12, wherein the rotary motion is the rotary motion of the rotor (7) of the converter module (32).

15. Use of a communication device (30) according to any of claims 1 to 14 as signal generator.

16. Use of a communication device (30) according to any of claims 1 to 14 to transmit measured sensor values.

17. Energy supply module for a communication device (30) according to any of claims 1 to 14, comprising
- a device designed as a motion module (31) for mechanically generating a motion, in particular a rotary motion, and
- a converter module (32) for converting the kinetic energy, in particular the rotational energy, of the motion, in particular the rotary motion, into electrical energy.

18. Converter module (32) for a communication device (30) according to any of claims 1 to 14, comprising a rotor (7) with at least one permanent magnet (17, 18) and a stator (19) separated from the rotor (7) by an air gap (21) and having at least one coil (20), preferably a multiplicity of coils (20).

## Revendications

1. Appareil de communication (30), contenant
- un module convertisseur (32) destiné à convertir de l'énergie cinétique, notamment de l'énergie de rotation, en énergie électrique,
- un module de gestion d'énergie (34) relié au module convertisseur et destiné à délivrer de l'énergie électrique conformément à des conditions aux limites prédéfinies à partir de l'énergie électrique délivrée par le module convertisseur (32) et
- un module d'émission (35) destiné à émettre des informations,
pour lequel les modules peuvent être remplacés individuellement contre des modules ayant des caractéristiques différentes, mais de préférence des tailles identiques ou compatibles,
**caractérisé en ce que**
le module de gestion d'énergie (34) possède un circuit imprimé sur lequel est disposé le module convertisseur (32) et qui possède un emplacement d'enfichage pour le module d'émission (35).

2. Appareil de communication (30) selon la revendication 1, pour lequel il existe un appareil réalisé sous la forme d'un module de mouvement (31) servant à générer mécaniquement un mouvement, notamment un mouvement de rotation, le module de mouvement étant relié au module convertisseur (32) et le module convertisseur convertissant le mouvement, notamment le mouvement de rotation, généré dans le module de mouvement en énergie électrique.

3. Appareil de communication (30) selon l'une des revendications précédentes, pour lequel le module de gestion d'énergie (34) possède une adaptation de puissance.

4. Appareil de communication (30) selon l'une des revendications précédentes, pour lequel le module d'émission (35) possède une borne pour un capteur.

5. Appareil de communication (30) selon l'une des revendications précédentes, comprenant un bouton-poussoir (2) chargé par ressort servant à générer le mouvement de rotation.

6. Appareil de communication (30) selon la revendication 5, comprenant un mécanisme d'entraînement à manivelle relié au bouton-poussoir (2).

7. Appareil de communication (30) selon la revendication 5, comprenant une crémaillère (1) reliée au bouton-poussoir (2).

8. Appareil de communication (30) selon l'une des revendications 1 à 5, comprenant une turbine exposée à un courant pour générer le mouvement de rotation.

9. Appareil de communication (30) selon l'une des revendications 5 à 8, comprenant une démultiplication dans le module pour générer le mouvement de rotation.

10. Appareil de communication (30) selon l'une des revendications précédentes, comprenant un dispositif antiretour et un dispositif de roue libre (6).

11. Appareil de communication (30) selon l'une des revendications précédentes, pour lequel le module convertisseur (32) possède un rotor (7) pourvu d'au moins un aimant permanent (17, 18) et un stator (19)séparé du rotor (7) par un entrefer et comportant au moins une bobine (20).

12. Appareil de communication (30) selon la revendication 11, pour lequel l'au moins une bobine est montée sur un circuit imprimé.

13. Appareil de communication (30) selon la revendication 12, pour lequel le circuit imprimé muni de l'au moins une bobine possède un emplacement d'enfichage pour le module de gestion d'énergie (34) et/ou un emplacement d'enfichage pour le module d'émission (35).

14. Appareil de communication (30) selon la revendication 11 ou 12, pour lequel le mouvement de rotation est le mouvement de rotation du rotor (7) du module convertisseur (32).

15. Utilisation d'un appareil de communication (30) selon l'une des revendications 1 à 14 en tant que transmetteur de signal.

16. Utilisation d'un appareil de communication (30) selon l'une des revendications 1 à 14 pour la transmission de valeurs mesurées de capteur.

17. Module d'alimentation en énergie pour un appareil de communication (30) selon l'une des revendications 1 à 14, contenant
- un appareil réalisé sous la forme d'un module de mouvement (31) servant à générer mécaniquement un mouvement, notamment un mouvement de rotation, et
- un module convertisseur (32) servant à convertir l'énergie cinétique, notamment l'énergie de rotation, du mouvement, notamment du mouvement de rotation, en énergie électrique.

18. Module convertisseur (32) pour un appareil de communication (30) selon l'une des revendications 1 à 14, contenant un rotor (7) pourvu d'au moins un aimant permanent (17, 18) et un stator (19) séparé du rotor (7) par un entrefer (21) et comportant au moins une bobine (20), de préférence une pluralité de bobines (20) .
